**Europäisches Patentamt**

**European Patent Office**

**Office européen des brevets**

(19)

(11) Veröffentlichungsnummer: **0 402 345**
**A2**

## EUROPÄISCHE PATENTANMELDUNG

(12)

(21) Anmeldenummer: 90890158.0

(22) Anmeldetag: 21.05.90

(51) Int. Cl.5: **G01P 1/10, G01P 3/66, G01P 13/04**

(30) Priorität: 29.05.89 AT 1281/89
16.01.90 AT 78/90

(43) Veröffentlichungstag der Anmeldung:
12.12.90 Patentblatt 90/50

(84) Benannte Vertragsstaaten:
CH DE FR GB IT LI NL SE

(71) Anmelder: Theurl, Johann, Dipl.-Ing. Dr.
St. Peter-Hauptstrasse 31d
A-8042 Graz(AT)

(71) Anmelder: Theurl, Nikolaus
Fröhlichgasse 21
A-8010 Graz(AT)

(72) Erfinder: Theurl, Johann, Dipl.-Ing. Dr.
St. Peter-Hauptstrasse 31d
A-8042 Graz(AT)
Erfinder: Theurl, Nikolaus
Fröhlichgasse 21
A-8010 Graz(AT)

(54) Geschwindigkeits- und Richtungskontrolle für Kraftfahrzeuge.

(57) Die Erfindung betrifft ein System zur Geschwindigkeits- und Richtungskontrolle für Kraftfahrzeuge und zwar derart, daß am Fahrzeug eine Sende- (2), eine Empfangs- (3) sowie eine Prozessoreinheit (5) installiert werden, die mit energielosen Reflektoreinrichtungen im Fahrbahnbelag (9) in Wechselwirkung stehen. Der Sender emittiert kontinuierlich elektromagnetische Wellen geeigneter Wellenlänge im Zentimeterbereich mit ausgeprägter Richtcharakteristik unter einem spitzen Winkel, zum Beispiel 45 Grad, in Achsrichtung auf die Fahrbahn (9). Je nach zulässiger Höchstgeschwindigkeit werden in der Fahrbahn (9) quer zur Fahrtrichtung in, den jeweils vorgegebenen Geschwindigkeitslimits entsprechenden, Abständen Reflexionsbänder verlegt. Die Hauptreflexionsrichtung der Reflexionsbänder weist mit der Fahrbahnoberfläche einen spitzen Winkel auf. Wird zwischen dem Registrieren von zwei aufeinanderfolgenden Impulsen ein vorgegebenes oberes Zeitintervall unterschritten, reagiert das System mit geschwindigkeitsmindernden Strategien im oder am Fahrzeug. Bei Geschwindigkeitsüberschreitungen können durch das System auf einer Punktewertkarte, das heißt auf einem elektronischen Führerschein in Form einer intelligenten Chipkarte, Punkte abgezogen und beim Unterschreiten von Geschwindigkeitslimits Punkte in geringem Ausmaß gutgeschrieben werden. Auf diese Weise kann eine völlig dezentrale und anonyme sowie verkehrserzieherische Form der Strafpunkteverwaltung erzielt werden. Wenn die Zeit zwischen zwei Impulsen kleiner als ein vorgegebener unterer Grenzwert ist, wird dies vom Prozessor (5) als ein krasses Ereignis interpretiert. Infolge der strengen Fixierung des Systems auf eine Fahrtrichtung können nach diesem Prinzip Fahrzeugbewegungen in eine falsche bzw. unzulässige Richtung - wie etwa falsches Auffahren auf eine Autobahn - vom System eindeutig erkannt und mit entsprechenden Reaktionen beantwortet werden. Dazu werden Reflexionsstreifen auf Einbahnstraßen in entsprechend geringen Abständen verlegt und zwar derart, daß die an den Streifen reflektierten elektromagnetischen Wellen nur an den Empfänger eines solchen Fahrzeuges, das sich in der unzulässigen Richtung bewegt, gelangen können. Wird eine Straße unter diesen Voraussetzungen in der erlaubten bzw. vorgeschriebenen Richtung befahren, kommt es wegen der erwähnten Ausrichtung der Reflektoren (6) zu keiner Registrierung eines krassen Ereignisses. Natürlich ist es möglich, in der erlaubten Richtung gleichzeitig - und völlig unabhängig von der Richtungskontrolle - eine Geschwindigkeitsanzeige bzw. Geschwindigkeitskontrolle nach diesem System zu installieren.

## Fig. 1

KRAFTFAHRZEUG (1)　　　　FAHRTRICHTUNG

REAKTION.　(5) PROZ.　(4) A/D

EMPFÄNGER (3)

SENDER (2)

FAHRBAHN (9)

(7)

(8)　(6)

## GESCHWINDIGKEITS- UND RICHTUNGSKONTROLLE FÜR KRAFTFAHRZEUGE

Die Erfindung betrifft ein System zur Geschwindigkeits- und Richtungskontrolle für Kraftfahrzeuge und zwar derart, daß am Fahrzeug je eine Sende-, Empfangs- und Prozessoreinheit installiert werden, die mit energielosen Reflektoreinrichtungen im Fahrbahnbelag in Wechselwirkung stehen. Durch entsprechende Anordnung der Systemkomponenten tritt die Wechselwirkung nur bei einer Fahrtrichtung auf. Bei Straßen mit Gegenverkehr werden für die entgegengesetzte Fahrtrichtung jeweils eigene Reflektoreinrichtungen verlegt. Die Wirkung erstreckt sich über die gesamte Fahrbahnbreite; dies gilt insbesondere auch für Straßen mit Gegenverkehr und ohne Richtungstrennung.

## STAND DER TECHNIK

Um ein Geschwindigkeitslimit einer, ein Kraftfahrzeug lenkenden Person mitzuteilen bzw. diese Information von außen in ein Fahrzeug zu übertragen, werden bisher Verkehrsschilder, Induktionsschleifen in der Fahrbahn oder Sendeeinrichtungen verwendet. Verkehrsschilder sind durch die fahrende Person nur visuell erfaßbar. Induktionsschleifen und Sendeeinrichtungen stellen jeweils energiegebundene Systeme dar.

## BESCHREIBUNG DER ERFINDUNG

Das Kraftfahrzeug (1) wird mit einem Sender (2) für elektromagnetische Wellen, einem Empfänger (3), sowie mit einem Prozessor (5) ausgestattet und andererseits werden in den Straßenbelag (9) in bestimmten Abständen Reflexionsbänder quer zur Fahrtrichtung und unter einem spitzen Winkel zur Fahrbahnoberfläche verlegt.

## SENDER (2)

Er sendet kontinuierlich elektromagnetische Wellen geeigneter Wellenlänge im Zentimeterbereich mit ausgeprägter Richtcharakteristik in Achsrichtung unter einem spitzen Winkel, zum Beispiel 45 Grad, auf die Fahrbahn (9) aus. Diese elektromagnetischen Wellen werden dann an speziellen, in die Fahrbahn (9) verlegten Bändern reflektiert.

## REFLEXIONSBÄNDER

Die Reflexionsbänder bestehen aus in Längsachse aneinandergereih ten Einzelelementen (7).

Diese Elemente (7) können etwa Würfel mit in ihrem Inneren eingebetteten, mit leitendem Material beschichteten Flächen (6) oder leitende Bleche (6) sein. Diese Flächen (6) können auch als reflektierende Dipole oder leitende Netze ausgebildet sein. Die elektromagnetischen Spiegel (6) sind in ihrer Form einer Kugelfläche angenäherte sphärische Hohlspiegel bzw. Konkavspiegel. Die kompakten Würfel (7) sind in ein schlauchähnliches druckbeständiges Material (8) eingebettet. Die reflektierenden Elemente (6) (7) werden, streifenförmig aneinandergereiht, über die ganze befestigte Straßenbreite senkrecht zur Fahrtrichtung in die Fahrbahndecke (9) verlegt. Die Hauptreflexionsrichtung des Reflexionsbandes weist einen spitzen Winkel zur Fahrbahnoberfläche auf. Das Reflexionsband wird mit deckentauglichem Material verfugt und abgedeckt.

## EMPFÄNGER (3)

Um die nötige Richtungsselektivität und Empfindlichkeit zu erreichen, wird der Empfänger (3) möglichst in der Sendeachse angebracht. Sender (2) und Empfänger (3) können getrennt oder in integrierter Form ausgebildet sein. Die empfangenen Signale werden nach dem Durchlaufen eines Analog/Digital-Wandlers (4) in einem

## PROZESSOR (5)

weiterverarbeitet, der dann unter gewissen Voraussetzungen die entsprechenden Reaktionen im oder am Kraftfahrzeug (1) steuert.

## ERLÄUTERUNG DES MESSPRINZIPS

Der Sender (2) schickt kontinuierlich Sendeimpulse aus. Der Empfänger (3) ist ständig auf der gleichen Frequenz auf Empfang geschaltet. Wenn das Fahrzeug einen Reflexionsstreifen überfährt, gelangen die Sendeimpulse zum Empfänger (3). Da die Stärke der dabei empfangenen Signale über einem fix einzustellenden Schwellenwert liegt, wird dieses Ereignis nach Durchlaufen des Analog/Digital-Wandlers (4) von dem Prozessor (5) eindeutig als Marke interpretiert, worauf beim erstmaligen Auftreten ein als Uhr fungierender Zähler gestartet wird. Das zeitliche Prüfintervall bzw. die Zeit zwischen dem Starten des Zählers und einer oberen Zeitmarke bzw. einem oberen Prüfwert ist im allgemeinen immer gleich lang. Bei Inbetriebnahme des Fahrzeuges wird das System gestartet und auf Null gesetzt.

## Ermittlung und Anzeige eines vorgegebenen Geschwindigkeitslimits

Je nach zulässiger Höchstgeschwindigkeit hat der Abstand der zwei zusammengehörenden Reflexionsbänder in der Fahrbahn (9) einen be stimmten Wert. Der Abstand der Reflexionsbänder stellt somit die einzige Variable in diesem System dar. Wenn innerhalb der fix vorgegebenen Zeiteinheit, das ist die Zeit zwischen dem Starten des Zählers und der oberen Zeitmarke bzw. vor deren Ablauf, ein zweiter Impuls empfangen wird, stellt der Prozessor (5) fest, daß die zulässige Höchstgeschwindigkeit überschritten wird und setzt den Zähler gleichzeitig auf Null. Die an dieser Stelle von der Behörde vorgegebene Höchstgeschwindigkeit wird folgendermaßen ermittelt:

$$\frac{t(b)}{t(v)} * v(T) = v(H)$$

t(b).... Fahrzeit zwischen den zwei zusammengehörenden Reflexionsstreifen
t(v).... im System vorgegebene Zeiteinheit (zwischen Start und oberer Zeitmarke)
v(T).... momentan gefahrene, tatsächliche Geschwindigkeit
v(H).... momentan zulässige Höchstgeschwindigkeit
Die momentan gefahrenen Geschwindigkeit v-(T) kann dabei auf folgende drei Arten festgestellt weden:
- mit Hilfe des Tachometers,
- anhand einer Radarmessung nach dem Dopplerprinzip, wobei dazu unter Umständen die Sende- und Empfangsanlage (2) (3) als Radargerät verwendet werden kann, oder
- mittels eines dritten Reflexionsstreifens, der dann mit den beiden oben erwähnten Streifen Streifen eine Einheit bildet. Dieser dritte Streifen ist in einem konstanten Abstand zum ersten Streifen angeordnet. Der Wert v(H) wird dabei folgendermaßen ermittelt:

$$\frac{t(1-2)}{t(v)} * \frac{d(1-3)}{t(1-3)} = v(H)$$

t(1-2)... Fahrzeit zwischen erstem und zweitem Reflexionsstreifen (t(1-2) = t(b))
t(1-3)... Fahrzeit zwischen erstem und drittem Reflexionsstreifen

d(1-3)... vogegebener Abstand zwischen erstem und drittem Streifen
setzt man das Verhältnis zwischen d(1-3) und t(v) gleich 1 (m/s), dann ergibt sich das momentan vorgeschriebene Geschwindigkeitslimit v(H) als das Verhältnis zwischen den Fahrzeiten t(1-2) und t(1-3).
Die momentan geltende Geschwindigkeitsbeschränkung wird im Fahrzeug eingeblendet. Infolge der strengen Fixierung des Systems auf eine Fahrtrichtung können bei Straßen mit Gegenverkehr beide Fahrtrichtungen - durch verschiedene Streifenabstände der jeweils nur in einer Fahrtrichtung wirkenden Reflexionseinheiten - für unterschiedliche Geschwindigkeitslimits präpariert werden. Diese Situation ist zum Beispiel im Übergangsbereich zwischen Otsgebiet und Freilandstrecke gegeben. Dort gelten jeweils ab der gleichen Stelle - je nach Fahrtrichtung (Ortsanfang oder Ortsende) - verschiedene Geschwindigkeitslimits.

## Richtungskontrolle

Wenn die Zeit zwischen zwei Impulsen kleiner als ein vorgegebener unterer Grenzwert ist, wird dies vom Prozessor (5) als ein krasses Ereignis interpretiert. Infolge der Fixierung des Systems auf eine Fahrtrichtung können nach diesem Prinzip Fahrzeugbewegungen in eine falsche bzw. unzulässige Richtung vom System eindeutig erkannt und mit entsprechenden Reaktionen beantwortet werden. Dazu werden Reflexionsstreifen auf Einbahnstraßen in entsprechend geringen Abständen verlegt und zwar derart, daß die an den Streifen reflektierten elektromagnetischen Wellen nur an den Empfänger eines solchen Fahrzeuges, das sich in der unzulässigen Richtung bewegt, gelangen können. Wird eine Straße unter diesen Voraussetzungen in der erlaubten bzw. vorgeschriebenen Richtung befahren, kommt es wegen der erwähnten Ausrichtung der Reflektoren (6) zu keiner Registrierung eines krassen Ereignisses. Natürlich ist es möglich, in der erlaubten Richtung gleichzeitig - und völlig unabhängig von der Richtungskontrolle - eine Geschwindigkeitsanzeige bzw. Geschwindigkeitskontrolle nach diesem System zu installieren.

## REAKTIONEN

Der beim Passieren eines Signals, d.h. einer Einheit aus zwei oder drei Reflexionsstreifen, ermittelte Wert wird als das, ab dieser Stelle geltende Geschwindigkeitslimit interpretiert und im Fahrzeug angezeigt. Zusätzlich können die drei Geschwindigkeitszustände, erlaubter Bereich, tolerierte Überschreitung und nicht mehr tolerierbare Überschreitung sowie das Fahren in einer unzulässigen Richtung auf einem Display angezeigt werden. Bei festgestellter Überschreitung eines Geschwindigkeitslimits kann das Systems unterschiedliche Reaktionen, wie optische oder akustische Signale im Fahrzeug oder, bei festgestellter falscher Fahrtrichtung, gefahrlose Stopmechanismen am Fahrzeug auslösen. Eine weitere Reaktion kann darin bestehen, daß ein Fahrzeug grundsätzlich nur nach dem Einschieben einer Mikroprozessor-Chipkarte - oder einer Chipkarte ähnlicher Bauart - in die beschriebene Vorrichtung zur Anzeige der Fahrzustände sowie der momentan gültigen Gschwindigkeitsbegrenzung in Gang gesetzt und betrieben werden kann. Auf diesem "Führerschein" - in Form einer intelligenten Chipkarte - ist neben Informationen zur inhabenden Person ein bestimmtes Punktekontingent gespeichert. Immer dann, wenn das System beim Passieren einer, mit Reflexionsbändern versehenen Stelle eine Überschreitung der zulässigen Höchstgeschwindigkeit registriert, wird von der Chipkarte eine festzulegende Punkteanzahl abgezogen. Bei Unterschreiten eines momentan geltenden Geschwindigkeitslimits werden Punkte in geringem Ausmaß gutgeschrieben. Dadurch kann eine völlig dezentrale und anonyme Form der Strafpunkteverwaltung verwirklicht werden. Weiters könnten mit dieser Karte die Daten für eine personenbezogene Besteuerung nach den pro Jahr gefahrenen Kilometern gesammelt werden. Die jährlich verbrauchte Punkteanzahl könnte neben dem Bonus/Malus-System als ein weiterer Parameter zur Festlegung der Kfz-Prämie herangezogen werden.

## Ansprüche

1. Vorrichtung zum Überwachen der Geschwindigkeit und der Fahrtrichtung von Kraftfahrzeugen mit einem am Kraftfahrzeug angeordneten Sender- und Empfängersystem, welches aus einem Sender für elektromagnetische Wellen, einem Empfänger für die an quer zur Fahrtrichtung im Bereich der Fahrbahn angeordneten Markierungen reflektierten elektromagnetischen Wellen und aus einer Auswerteschaltung für die vom Empfänger erfaßten Signale besteht, **dadurch gekennzeichnet**, daß die Wellenlänge der elektromagnetischen Wellen im Zentimeterbereich liegt, daß der Sender (2) eine Richtcharakteristik aufweist, wodurch die elektromagnetischen Wellen unter einem spitzen Winkel, zum Beispiel 45 Grad, gegen die Fahrbahnoberfläche abgestrahlt werden und daß die Markierungen in der Fahrbahn (9) angeordnet sind, wobei jede Markierung aus mehreren, nebeneinander liegenden Konkavspiegeln (6) für die elektromagnetischen Wellen besteht und die Hauptreflexionsrichtung der Konkavspiegel (6) einen spitzen Winkel zur Fahrbahnoberfläche aufweist.

2. Vorrichtung nach Anspruch 1, **dadurch gekennzeichnet**, daß, wie an sich bekannt, mittels der Auswerteschaltung der zeitliche Abstand zweier, von aufeinanderfolgenden Markierungen stammenden, Signale erfaßbar ist, wobei bei Unterschreitung eines vorgebbaren Grenzwertes Anzeigeeinrichtungen und/oder geschwindigkeitsändernde Maßnahmen auslösbar sind.

3. Vorrichtung nach Anspruch 1 oder 2, **dadurch gekennzeichnet**, daß jede Markierung aus nebeneinander angeordneten Würfeln (7) besteht, wobei im Inneren jedes Würfels (7) der Konkavspiegel (6) für die elektromagnetischen Wellen angeordnet ist.

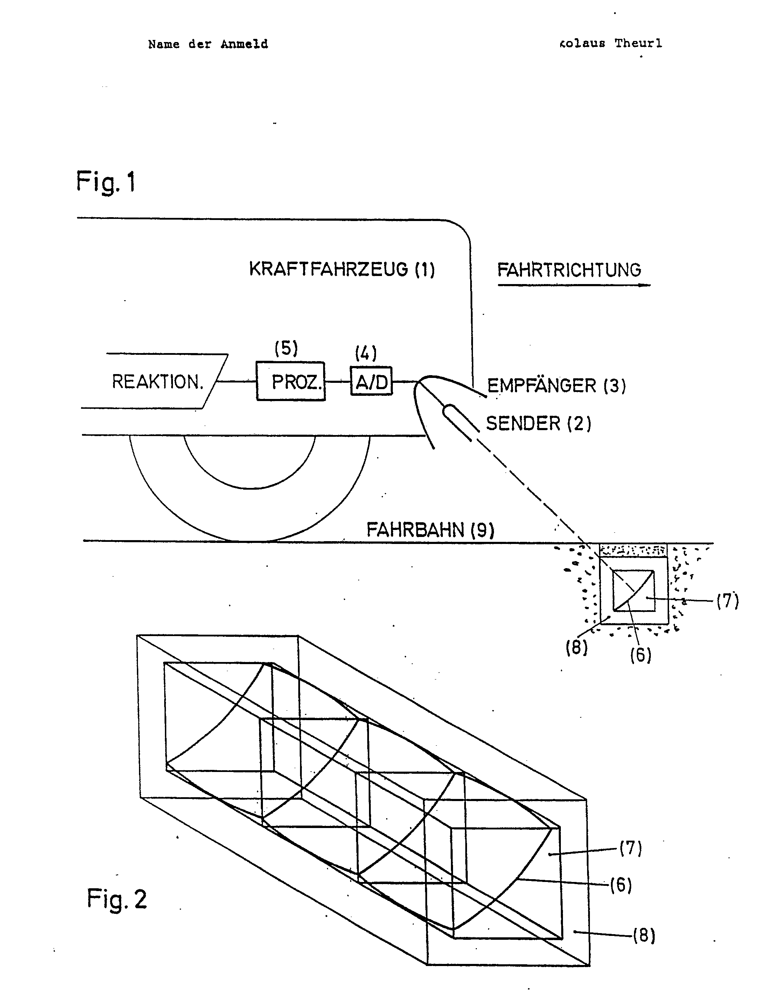

4. Vorrichtung nach Anspruch 3, **dadurch gekennzeichnet**, daß die einzelnen Würfel (7) einer Markierung in ein schlauchähnliches druckbeständiges Material (8) eingebettet sind (Fig. 2).

5. Vorrichtung nach den Ansprüchen 1 oder 2, **dadurch gekennzeichnet**, daß ein Kraftfahrzeug grundsätzlich nur nach dem Einschieben einer ISO-genormten bzw. einer ähnlichen Chip-Karte betrieben werden kann, und daß auf dieser Karte neben Informationen zur inhabenden Person, etwa in der Art eines elektronischen Führerscheines, ein bestimmtes Punktekontingent gespeichert ist, von dem, bei einer vom System registrierten Geschwindigkeitsüberschreitung, eine festzulegende Anzahl von Punkten in Form einer völlig dezentralen und anonymen Strafpunkteverwaltung abgezogen wird, sowie, daß bei Unterschreitung eines momentan geltenden Geschwindigkeitslimits, als verkehrserzieherische Maßnahme, Punkte in geringem Ausmaß aufaddiert werden.

Name der Anmeld                    κolaus Theurl

## Fig. 1

KRAFTFAHRZEUG (1)            FAHRTRICHTUNG

(5)        (4)

REAKTION.    PROZ.    A/D        EMPFÄNGER (3)

SENDER (2)

FAHRBAHN (9)

(7)

(8)        (6)

(7)

(6)

(8)

## Fig. 2